(19) Europäisches Patentamt / European Patent Office / Office européen des brevets

(11) **EP 3 518 623 B1**

(12) **EUROPEAN PATENT SPECIFICATION**

(45) Date of publication and mention
of the grant of the patent:
**05.03.2025 Bulletin 2025/10**

(21) Application number: **18209403.7**

(22) Date of filing: **30.11.2018**

(51) International Patent Classification (IPC):
**H05B 45/10** (2020.01)  **H05B 45/3575** (2020.01)
**H05B 45/395** (2020.01)

(52) Cooperative Patent Classification (CPC):
**H05B 45/10; H05B 45/3575; H05B 45/395;**
Y02B 20/30

(54) **DIMMABLE LIGHT EMITTING DIODE DRIVE CIRCUIT**

DIMMBARE LEUCHTDIODENTREIBERSCHALTUNG

CIRCUIT DE COMMANDE DE DIODE ÉLECTROLUMINESCENTE À GRADATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.01.2018 CN 201810005548**

(43) Date of publication of application:
**31.07.2019 Bulletin 2019/31**

(73) Proprietor: **Silergy Semiconductor Technology
(Hangzhou) Ltd
Hangzhou, Zhejiang 310012 (CN)**

(72) Inventors:
• **WANG, Jianxing
Hangzhou, Zhejiang 310012 (CN)**
• **CHEN, Huiqiang
Hangzhou, Zhejiang 310012 (CN)**

(74) Representative: **Ström & Gulliksson AB
P.O. Box 793
220 07 Lund (SE)**

(56) References cited:
**CN-A- 106 888 524    US-A1- 2013 343 090
US-A1- 2018 310 376**

## Description

### FIELD

The present disclosure relates to power electronic technology, in particular to light emitting diode (LED) drive circuit technology, and particularly to a circuit module, a dimmable LED drive circuit and a control method.

### BACKGROUND

At present, the silicon-controlled rectifier dimming is a commonly used dimming method. A phase control method is adopted by a silicon-controlled rectifier dimmer TRIAC to perform dimming, that is, the silicon-controlled rectifier dimmer is controlled to be turned on in each half cycle of the sinusoidal wave to acquire the same conduction phase angle. By adjusting the chopper phase of the silicon-controlled rectifier dimmer, the conduction phase angle can be changed to perform dimming.

In the conventional technology, the silicon-controlled rectifier dimmer is generally combined with the linear constant current control. The linear constant current control is implemented by controlling a linear device (for example, a transistor in a linear state) substantially connected in series with at least a part of an LED load to adjust the current flowing through the LED load so as to maintain the current constant. A time period during which the silicon-controlled rectifier dimmer is turned on in an operation period (which usually is a half-wave period of the alternating current) may be indicated by a conduction angle. Further, it is required to sink a bleeder current from the direct current bus, so as to ensure the operation of the silicon-controlled rectifier dimmer. In a case that the conduction angle of the silicon-controlled rectifier dimmer is large, the direct current bus voltage when the silicon-controlled rectifier dimmer is turned on is less than the lighting voltage of the LED load, and the LED load still does not operate. In this case, the bleeder circuit is required to sink a large current until the direct current bus voltage rises to the lighting voltage, which results in a large circuit loss, and greatly reduces system efficiency. Further, the temperature of the circuit is increased due to the heat generated by the bleeder circuit, which further affects the system performance.

CN 106888524 A discloses an LED drive circuit having a silicon controlled rectifier regulator, a circuit module, and a control method. Before conduction of a silicon controlled rectifier regulator, a direct-current bus voltage is controlled by a bleeder circuit to change in a predetermined manner, so that a phenomenon that conduction points of the silicon controlled rectifier regulators are affected because of inconformity of leakage currents due to different types of the silicon controlled rectifier regulators and different circuit setting and thus a problem of LED scintillation can be solved. Meanwhile, with control of the direct-current bus voltage, the voltage of the silicon controlled rectifier regulator after conduction can be affected, so that the voltage of the conduction point can be set flexibly based on needs.

US 2013/343090 A1 discloses an active bleeder according to an exemplary embodiment of the present invention includes a bleed switch coupled to the input voltage and an active bleeding controller generating a bleed reference voltage according to a result of counting a period during which the input voltage is generated and switching the bleed switch according to a result of comparison between the bleed reference voltage and a bleed sense voltage corresponding to a current flowing to the bleed switch.

However, CN 106888524 A and US 2013/343090 A1 cannot greatly improve system efficiency effectively, and the temperature of the circuit is still increased due to the heat generated by the bleeder circuit, which further affects the system performance.

### SUMMARY

In view of this, there are provided a circuit module, a dimmable LED drive circuit, and a control method according to embodiments of the present disclosure, to effectively reduce system loss and improve system efficiency. The disclosure is defined by the independent claim. The dependent claims define embodiments.

With the technical solutions according to the embodiments of the present disclosure, the direct current bus voltage during the bleeding is controlled to be constant, and the desired value of the direct current bus voltage is adjustable, so that the turn-on time instant can be delayed in the case that the conduction angle is large, and the direct current bus voltage when the silicon-controlled rectifier dimmer is turned on can be near a lighting voltage. In this way, it is not required to sink the bleeder current from the direct current bus for a long time period after the silicon-controlled rectifier dimmer is turned on, effectively reducing the system loss, and improving the system efficiency.

### BRIEF DESCRIPTION OF THE DRAWINGS

The above and other objects, features, and advantages of the present disclosure are clearer from the following description of embodiments of the present disclosure with reference to the drawings. In the drawings:

Figure 1 is a circuit diagram showing an LED drive circuit according to an embodiment of the present disclosure;

Figure 2 is a circuit diagram showing a detailed structure of the LED drive circuit according to the embodiment of the present disclosure;

Figure 3 is a circuit diagram showing an implementation of a detection circuit according to the embodiment of the present disclosure;

Figure 4 is an operation waveform diagram of the detection circuit shown in Figure 3;

Figure 5 is a circuit diagram showing another implementation of the detection circuit according to the embodiment of the present disclosure;

Figure 6 is an operation waveform diagram of the detection circuit shown in Figure 5;

Figure 7 is a circuit diagram showing a reference voltage setting circuit according to the embodiment of the present disclosure;

Figure 8 is a circuit diagram showing a bleeder circuit and a bleeding controller according to the embodiment of the present disclosure;

Figure 9 is a circuit diagram showing an enable signal generating circuit for controlling a clamp circuit according to the embodiment of the present disclosure;

Figure 10 is an operation waveform diagram of the LED drive circuit according to the embodiment of the present disclosure; and

Figure 11 is a flowchart showing a control method for controlling an LED drive circuit according to an embodiment of the present disclosure, which is not covered by the appended claims.

## DETAILED DESCRIPTION OF EMBODIMENTS

The present disclosure is described below based on embodiments, and the present disclosure is not limited to the embodiments. In the following description of the present disclosure, specific details are described in detail. The present disclosure can be fully understood by those skilled in the art without the description of these details. Well-known methods, processes, flows, components and circuits are not described in detail to avoid obscuring the essence of the present disclosure.

Further, it should be understood by those skilled in the art that, the drawings herein are only for illustration, and the drawings are not necessarily drawn to scale.

It should further be understood that in the following description, a "circuit" indicates a conductive loop formed by at least one component or sub-circuit by electrical connection or electromagnetic connection. In a case that a component or circuit is described as being "connected to" another component or being "connected" between two nodes, the component or circuit may be coupled or connected to another component directly or via an intermediate component. The connection between the two components may be physical connection, logical connection, or a combination thereof. In addition, in a case that the component is described as being "directly coupled to" or "directly connected to" another component, it indicates that no intermediate component exists between the two components.

Unless otherwise indicated in the context, the words "including", "comprising", and the like, in the specification and the claims, should be interpreted as being inclusive rather than being exclusive or exhaustive, i.e., "including but not limited to".

In the description of the present disclosure, it should be understood that, the terms "first", "second", and the like are used only for descriptive purposes and are not to be construed as indicating or implying relative importance. In addition, in the present disclosure, the word "multiple" indicates two or more unless otherwise specified.

It is found that, in a case that a conduction angle of a silicon-controlled rectifier dimmer TRIAC is large, a bleeder circuit sinks a bleeder current from a direct current bus to provide a turn-on current before the silicon-controlled rectifier dimmer TRIAC is turned on. Due to the large conduction angle, a direct current bus voltage VBUS when the silicon-controlled rectifier dimmer TRIAC is turned on is lower than a lighting voltage VLED, and the bleeder circuit is required to continue to sink the bleeder current to provide a holding current, so as to ensure that the silicon-controlled rectifier dimmer TRIAC can be effectively turned on. In the case that the conduction angle of the silicon-controlled rectifier dimmer TRIAC is large, the direct current bus voltage VBUS can be controlled at a desired value to be constant before the silicon-controlled rectifier dimmer TRIAC is turned on, in order to reduce a time period of the bleeder current. However, one disadvantage of this approach is that, the desired value of the direct current bus voltage VBUS cannot be changed for different conduction angles, the bleeder current need be provided until the direct current bus voltage VBUS rises to be greater than the lighting voltage VLED, which results in a large circuit loss, and greatly reduces system efficiency. Further, the temperature of the circuit is increased due to the heat generated by the bleeder circuit, which further affects the system performance.

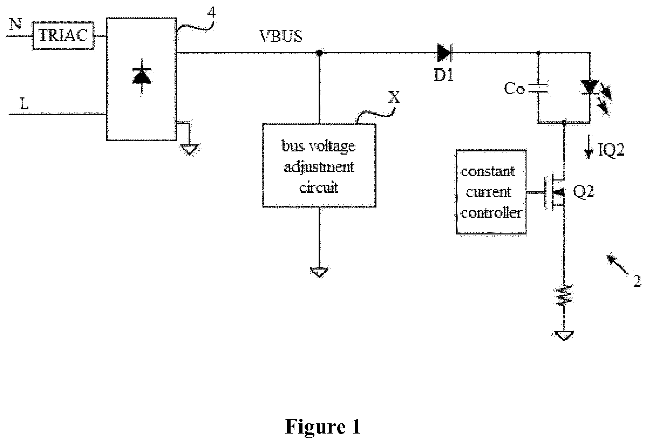

Figure 1 is a circuit diagram showing an LED drive circuit according to an embodiment of the present disclosure. As shown in Figure 1, the LED drive circuit according to the present embodiment includes a silicon-controlled rectifier dimmer TRIAC, a linear drive circuit 2, a rectification circuit 4, and a bus voltage adjustment circuit X. The bus voltage adjustment circuit X is configured to adjust a direct current bus voltage to delay a turn-on time instant of the silicon-controlled rectifier dimmer in a case that a conduction angle signal is greater than an angle threshold.

Specifically, the bus voltage adjustment circuit X is configured to increase the direct current bus voltage in the case that the conduction angle signal is greater than the angle threshold, so that an absolute value of a difference between the direct current bus voltage when the silicon-controlled rectifier dimmer is turned on and a preset lighting voltage of an LED load is in a preset range.

Specifically, the bus voltage adjustment circuit X is configured to control the direct current bus voltage to be maintained at a first voltage in the case that the conduction angle signal is greater than the angle threshold, where the first voltage is set so that the absolute value of the difference between the direct current bus voltage when the silicon-controlled rectifier dimmer is turned on and the preset lighting voltage of the LED load is in the preset range. The first voltage is set based on the conduction angle signal. A large conduction angle signal corresponds to a large first voltage, to ensure that the direct current bus voltage when the silicon-controlled rectifier dimmer is turned on is near the lighting voltage, so that the absolute value of the difference between the direct current bus voltage and the lighting voltage is in the preset range. The preset range is determined by the demands of application environments.

Specifically, the bus voltage adjustment circuit X is configured to increase the direct current bus voltage to delay the turn-on time instant of the silicon-controlled rectifier dimmer in the case that the conduction angle signal is greater than the angle threshold, so that the direct current bus voltage when the silicon-controlled rectifier dimmer is turned on is not less than the preset lighting voltage of the LED load.

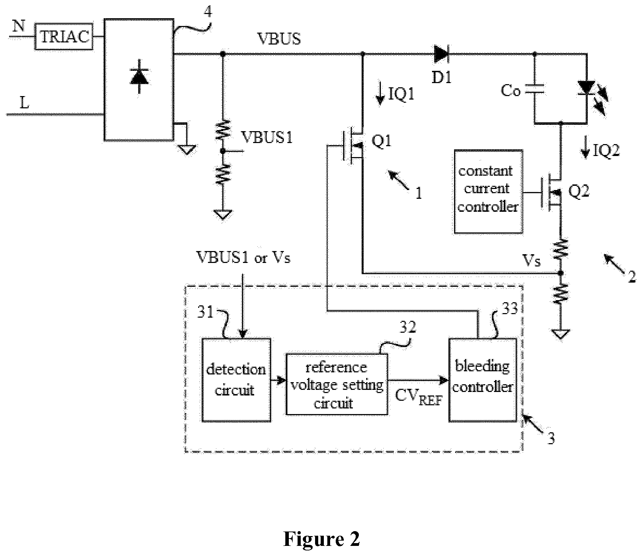

Figure 2 is a circuit diagram showing a detailed structure of the LED drive circuit according to the embodiment of the present disclosure. As shown in Figure 2, the LED drive circuit according to the present embodiment includes the silicon-controlled rectifier dimmer TRIAC, a bleeder circuit 1, the linear drive circuit 2, a control circuit 3, and the rectification circuit 4. The silicon-controlled rectifier dimmer TRIAC is connected between the rectification circuit 4 and an alternating current input terminal to chop an alternating current input voltage. The rectification circuit 4 is configured to convert the alternating current input voltage into a direct current bus voltage VBUS at a terminal of the direct current bus. The bleeder circuit 1 is connected between a direct current voltage bus and a ground terminal to form a current path substantially in parallel with an LED load. The bleeder circuit 1 is used to sink a bleeder current from the direct current bus and continuously maintain the operation of the silicon-controlled rectifier dimmer TRIAC.

The control circuit 3 and the bleeder circuit 1 form the bus voltage adjustment circuit X.

The control circuit 3 is configured to acquire a conduction angle signal of the silicon-controlled rectifier dimmer and control a bleeder current of the bleeder circuit 1, to adjust the direct current bus voltage and delay the turn-on time instant of the silicon-controlled rectifier dimmer. Specifically, the control circuit 3 is configured to adjust the direct current bus voltage in the case that the conduction angle signal is greater than the angle threshold, so that the direct current bus voltage VBUS when the silicon-controlled rectifier dimmer is turned on is near a preset lighting voltage VLED, for example, is slightly less than or slightly greater than the lighting voltage VLED. The direct current bus voltage VBUS when the silicon-controlled rectifier dimmer is turned on is controlled so that the absolute value of the difference between the direct current bus voltage VBUS and the lighting voltage VLED is small, to reduce the power loss of the LED drive circuit. For example, the absolute value of the difference between the direct current bus voltage VBUS and the lighting voltage VLED may range from 0V to 30V. Thus, the bleeder current can be dynamically controlled based on the conduction angle signal to adjust the turn-on time instant of the silicon-controlled rectifier dimmer TRIAC, so that the time period during which it is still required to sink the bleeder current after the silicon-controlled rectifier dimmer TRIAC is turned on and the energy required for the bleeding can be decreased as much as possible, thereby reducing loss as much as possible.

In one embodiment, the direct current bus voltage VBUS may be adjusted to be not less than the preset lighting voltage VLED. The conduction angle is defined as an angle indicating a conduction period of the silicon-controlled rectifier dimmer in an operation period. The conduction angle signal is used to indicate the conduction period or the conduction angle.

Further, the control circuit 3 is configured to adjust a desired value of the direct current bus voltage VBUS during bleeding process so that the direct current bus voltage VBUS when the silicon-controlled rectifier dimmer TRIAC is turned on is slightly greater than the preset lighting voltage VLED. Thus, the bleeder current can be dynamically controlled based on the conduction angle signal to adjust the turn-on time instant, so that it is not required to sink the bleeder current after the silicon-controlled rectifier dimmer TRIAC is turned on, thereby reducing the power loss as much as possible.

In another embodiment, the control circuit 3 is configured to control the desired value of the direct current bus voltage to change with the conduction angle signal in the case that the conduction angle signal is greater than the angle threshold, and control the desired value of the direct current bus voltage to be a preset value in a case that the conduction angle signal is less than the angle threshold. The preset value corresponds to a direct current bus voltage corresponding to the maximum conduction angle, and may be zero or greater than zero. Specifically, the desired value is adjusted by adjusting a reference voltage $CV_{REF}$ used by the control circuit 3 to control the bleeding process. The reference voltage $CV_{REF}$ is used to indicate the desired value. In the case that the conduction angle signal is greater than the angle threshold, the reference voltage may be set according to the following formula:

$$CV_{REF} = (Vcd - Vcd\_ref) \times K + CV_{REF\_MIN}$$

where $CV_{REF}$ denotes the reference voltage, Vcd denotes the conduction angle signal, Vcd_ref denotes the angle threshold, $CV_{REF\_MIN}$ denotes a reference voltage corresponding the preset value, the angle threshold corresponds to the conduction angle signal when the direct current bus voltage is equal to the preset lighting voltage at the turn-on time instant of the silicon-controlled rectifier dimmer, and K denotes a preset adjustment coefficient.

That is, in the above embodiment, the angle threshold is set to meet the following rule: for alternating current input power with commonly used parameters (e.g., the alternating current power of 220V and 50Hz), in a case that the silicon-controlled rectifier dimmer performs chopping at a conduction angle equal to the angle threshold, the voltage obtained by the chopping is equal to or slightly greater than the lighting voltage VLED. Thus, the direct current bus voltage at the turn-on time instant is greater than the lighting voltage VLED if the conduction angle signal is less than the angle threshold, and the direct current bus voltage at the turn-on time instant is less than the lighting voltage VLED if the conduction angle signal is greater than the angle threshold, but still have a higher value. In this case, the bleeder circuit sinks the bleeder current from a high direct current bus voltage, which should be avoided by control. In this embodiment, when it is detected that the conduction angle signal is greater than the angle threshold, the reference voltage $CV_{REF}$ for indicating the desired value of the direct current bus voltage is set to change with the conduction angle signal Vcd, as shown in above formula. Therefore, the direct current bus voltage can be raised as the conduction angle signal increases, to delay the turn-on time instant of the silicon-controlled rectifier dimmer TRIAC, so that the direct current bus voltage at the turn-on time instant is raised to be a voltage greater than or slightly greater than the lighting voltage VLED.

The conduction angle signal may be acquired in various ways. For example, the conduction angle signal may be acquired by detecting the direct current bus voltage VBUS. Specifically, the conduction angle signal may be acquired by detecting a time period from a time instant when the direct current bus voltage VBUS rises to a voltage greater than a first threshold to a time instant when the direct current bus voltage VBUS decreases to a voltage less than a second threshold in an operation period. As another example, the conduction angle signal may be acquired by detecting a drive current of the LED load. Specifically, the conduction angle signal may be acquired by detecting a time period during which the drive current is continuously greater than a third threshold.

In this embodiment, the control circuit 3 forms a voltage feedback loop based on a direct current bus voltage sampling signal VBUS1, to control the direct current bus voltage VBUS to change in a desired way before the silicon-controlled rectifier dimmer TRIAC is turned on. The direct current bus voltage sampling signal VBUS1 may be obtained by performing sampling with a resistor voltage divider network arranged between the direct current bus and the ground terminal. The control circuit 3 may turn off the bleeder circuit when it is detected that the silicon-controlled rectifier dimmer TRIAC is turned on or the direct current bus voltage VBUS rises to a voltage greater than the lighting voltage VLED.

Figure 2 shows the detailed structure of the LED drive circuit according to the embodiment of the present disclosure. As shown in Figure 2, the bleeder circuit 1 includes a transistor Q1. The linear drive circuit 2 includes a transistor Q2, and is used to control a drive current flowing through the LED load to maintain the drive current substantially constant. The LED drive circuit according to this embodiment may further include a diode D1 connected between the bleeder circuit and the LED load and a filter capacitor Co connected in parallel with the LED load. It should be understood that the diode D1 may be omitted or replaced with other unidirectional circuits. The bleeder circuit 1 and the linear drive circuit 2 may further be provided with resistors to sample the flowed bleeder current or drive current. The resistors may be arranged in a manner different from that shown Figure 2.

The control circuit 3 may include a detection circuit 31, a reference voltage setting circuit 32, and a bleeding controller 33. The detection circuit 31 is used to acquire the conduction angle signal Vcd.

The reference voltage setting circuit 32 is configured to set the reference voltage $CV_{REF}$ based on the conduction angle signal in the described-above manner to adjust the desired value of the direct current bus voltage.

The bleeding controller 33 is used to control the bleeder current of the bleeder circuit 1 based on the reference voltage $CV_{REF}$ and the direct current bus voltage sampling signal VBUS1, so that the direct current bus voltage VBUS changes with the desired value indicated by the reference voltage $CV_{REF}$. Specifically, the bleeding controller 33 generates a control signal to control the transistor Q1, so as to adjust a current IQ1 flowing through the transistor Q1.

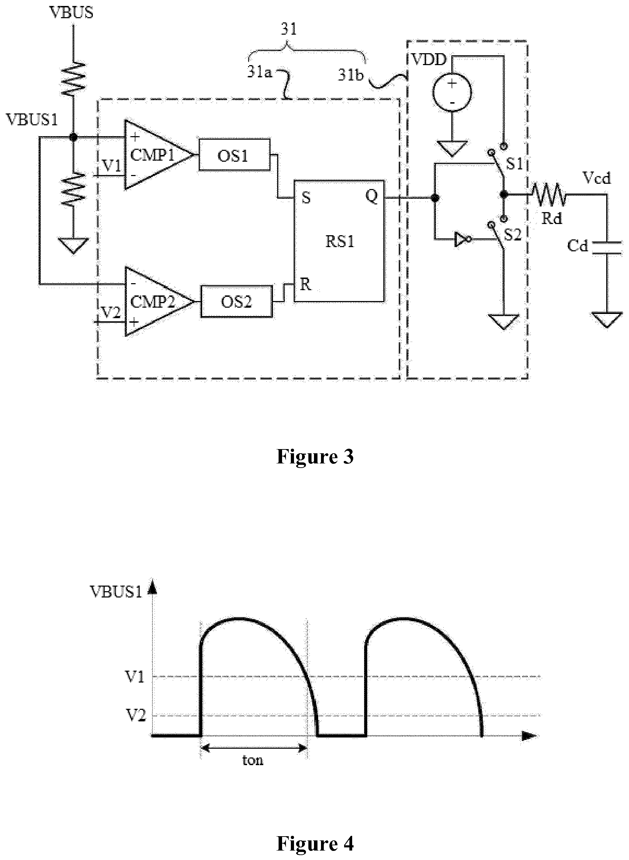

Figure 3 is a circuit diagram showing an implementation of a detection circuit according to the embodiment of the present disclosure. The detection circuit 31 acquires the conduction angle signal by detecting the direct current bus voltage VBUS. Specifically, the detection circuit 31 is configured to acquire a signal for indicating a time period from a time instant when the direct current bus voltage VBUS rises to a voltage greater than a first threshold to a time instant when the direct current bus voltage VBUS decreases to a voltage less than a second threshold, in order to acquire the conduction angle signal. The first threshold may be set to an integer multiple of the second threshold, so as to better reuse a voltage source.

As shown in Figure 3, the detection circuit 31 includes comparators CMP1 and CMP2, one-shot circuits OS1 and OS2, a RS trigger RS1, a voltage source VDD, switches S1 and S2, a resistor Rd, and a capacitor Cd. Other components in the circuit than the capacitor Cd may be implemented by an integrated circuit. One input terminal of the comparator CMP1 is applied with the direct current bus voltage sampling signal VBUS1 for indicating the direct current bus voltage VBUS, the other input terminal of the comparator CMP1 is applied with a threshold V1, and an output terminal of the comparator CMP1 is connected to an input terminal of the one-shot circuit OS1. An output terminal of the one-shot circuit OS1 is connected to a set terminal of the RS trigger RS1. Thus, the one-shot circuit OS1 may generate a pulse having a preset time length in response to a rising or falling edge of an input signal to set the output signal of the RS trigger RS1. One input terminal of the comparator CMP2 is applied with the direct current bus voltage sampling signal VBUS1, the other input terminal of the comparator CMP2 is applied with a threshold V2, and an output terminal of the comparator CMP2 is connected to an input terminal of the one-shot circuit OS2. An output terminal of the one-shot circuit OS2 is connected to a reset terminal of the RS trigger RS1. Thus, the one-shot circuit OS2 may generate a pulse having a preset time length in response to a rising or falling edge of an input signal to reset the output signal of the RS trigger RS1. In this way, a state controller 31a is formed. The state controller 31a controls a charge and discharge circuit 31b to switch to a first state when it is detected that the direct current bus voltage VBUS rises to a voltage greater than the first threshold, and controls the charge and discharge circuit 31b to switch to a second state when it is detected that the direct current bus voltage VBUS decreases to a voltage less than the second threshold. The first threshold corresponds to the threshold V1, and the second threshold corresponds to the threshold V2. The switches S1 and S2 are connected in series between a positive terminal of the voltage source VDD and a ground terminal. The switch S1 is controlled by an output signal Q of the RS trigger, and the switch S2 is controlled by an inverting signal of the signal Q. Therefore, the switch S1 and the switch S2 are in opposite states. The resistor Rd and the capacitor Cd are connected in series between a common connection terminal of the switch S1 and the switch S2 and the ground terminal. In a case that the switch S1 is turned on, the switch S2 is turned off, and the capacitor Cd is charged. In a case that the switch S1 is turned off, the switch S2 is turned on, and the capacitor Cd is discharged through the resistor Rd and the switch S2. In this way, a charge and discharge circuit 31b is formed. The charge and discharge circuit 31b charges the capacitor Cd in the first state and discharges the capacitor Cd in the second state under control of the state controller. The resistor Rd and the capacitor Cd form an RC circuit, which leads to hysteresis on the change of a voltage Vcd across the capacitor Cd due to the existence of the resistor Rd. In this case, the voltage Vcd slowly changes with the conduction angle.

Since the voltage Vcd changes little in an operation period, the voltage Vcd at any one time instant in the operation period may serve as the conduction angle signal. Since the capacitor is conductive with respect to an instantaneous voltage (the capacitor has almost no resistance), an instantaneous current is quite large when the capacitor is directly connected to the voltage source VDD, which results in a charging-end component easily being burned. Therefore, the resistor is connected in series with the capacitor so as to limit a maximum current.

Figure 4 is an operation waveform diagram of the detection circuit shown in Figure 3. As shown in Figure 4, when the silicon-controlled rectifier dimmer is turned on, the voltage VBUS1 rises with the direct current bus voltage to a voltage greater than the threshold V1. When the operation period substantially ends, the voltage VBUS1 decreases with the direct current bus voltage to a voltage less than the threshold V2. Thus, the voltage Vcd changes slowly in one operation period, and may indicate the time period ton from a time instant when the silicon-controlled rectifier dimmer is turned on to a time instant when the operation period substantially ends.

It should be understood that in the detection circuit 31, the connection manner of the input terminal of the comparator, the trigger manner of the one-shot circuit, and the connection relation of the RS trigger may be adjusted based on the set of a valid level and the relation manner of the input signal.

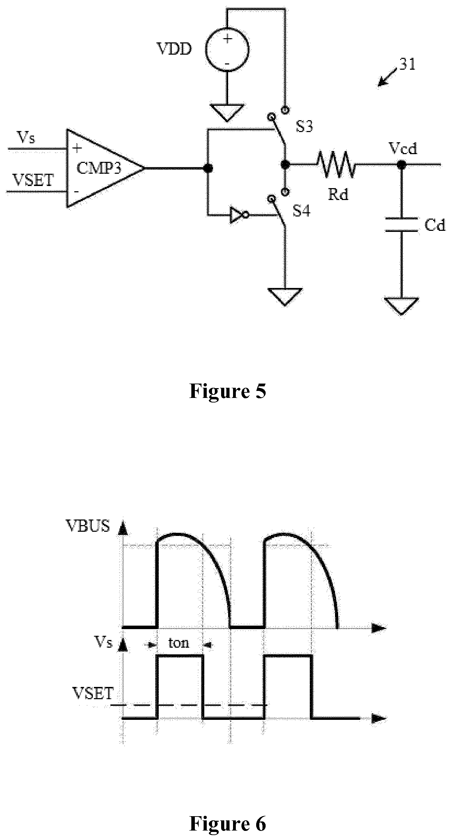

Figure 5 is a circuit diagram showing another implementation of the detection circuit according to the embodiment of the present disclosure. The detection circuit 31 is configured to acquire a signal for indicating a time period during which the drive current is continuously greater than a third threshold to acquire the conduction angle signal.

As shown in Figure 5, the detection circuit 31 includes a comparator CMP3, a voltage source VDD, switches S3 and S4, a resistor Rd, and a capacitor Cd. One input terminal of the comparator CMP3 receives a current sampling signal Vs, and the other input terminal of the comparator CMP3 is applied with a threshold VSET. The threshold VSET corresponds to a fourth threshold. The switches S3 and S4 are connected in series between a positive terminal of the voltage source VDD and a ground terminal. The switch S3 is controlled by an output signal of the comparator CMP3, and the switch S4 is controlled by an inverting signal of the output signal of the comparator CMP3. Thus, the switch S3 and the switch S4 are in opposite states. The resistor Rd and the capacitor Cd are connected in series between a common connection terminal of the switch S3 and the switch S4 and the ground terminal. In a case that the drive current is greater than the third threshold, the current sampling signal Vs is greater than the threshold VSET, the comparator CMP3 outputs a high level, the switch S3 is turned on, the switch S4 is turned off, and the voltage source VDD charges the capacitor Cd through the switch S3 and the resistor Rd. In a case that the drive current is less than the third threshold (in this case, the drive current is actually close to zero), the current sampling signal Vs is less than the threshold VSET, the comparator CMP3 outputs a low level, the switch S3 is turned off, the switch S4 is turned on, and the capacitor Cd is discharged through the resistor Rd and the switch S4. Due to the resistor Rd, a voltage Vcd across the capacitor Cd changes slowly in an operation period, and may be used to indicate the time period ton during which the LED load operates, which corresponds directly to the conduction angle, as shown in Figure 6. Therefore, the voltage Vcd in this implementation may serve as the conduction angle signal.

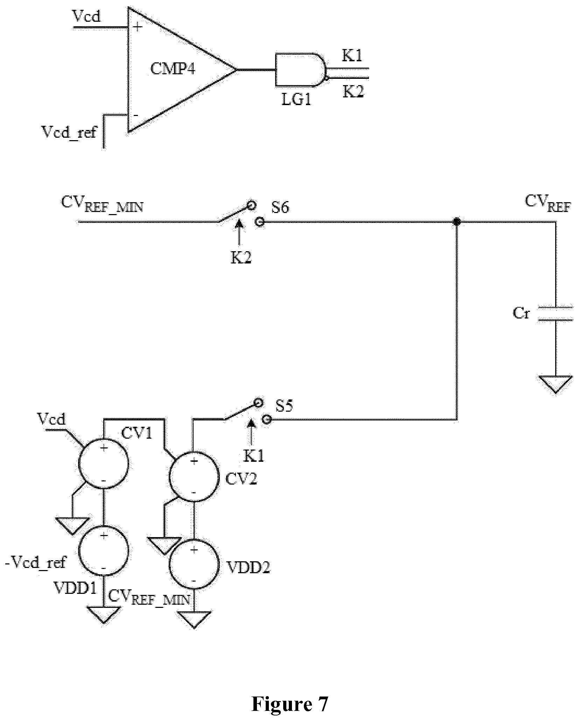

Figure 7 is a circuit diagram showing a reference voltage setting circuit according to the embodiment of the present disclosure. As shown in Figure 7, the reference voltage setting circuit 32 includes a comparator CMP4, a logic circuit LG1, switches S5 and S6, voltage sources VDD1 and VDD2, controlled voltage sources CV1 and CV2, and a capacitor Cr. One input terminal of the comparator CMP4 receives the conduction angle signal Vcd, and the other input terminal of the comparator CMP4 receives the angle threshold Vcd_ref. The logic circuit LG1 outputs a non-inverting signal K1 and an inverting signal K2 of an output signal of the comparator CMP4. The switch S5 is controlled by the signal K1. The switch S6 is controlled by the signal K2. The switch S6 is used to control a path from a preset value (of a voltage signal) $CV_{REF\_MIN}$ to the capacitor Cr. The switch S5 is used to control a path from a voltage expressed as (Vcd-Vcd_ref) $*K+CV_{REF\_MIN}$ to the capacitor Cr. Since the control signals for the switches S5 and S6 are inverted, only one of the two voltage signals is introduced to the capacitor Cr. Further, a circuit formed by the voltage sources VDD1 and VDD2 and the controlled voltage sources CV1 and CV2 is controlled by the conduction angle signal Vcd, and generates the output voltage (Vcd-Vcd_ref) $*K+CV_{REF\_MIN}$ . The voltage across the capacitor Cr is outputted as a reference voltage $CV_{REF}$. The capacitor Cr is used to cause the reference voltage $CV_{REF}$ to change smoothly when being switched. Therefore, in a case that the conduction angle signal Vcd is less than the angle threshold Vcd_ref, the comparator CMP4 outputs a low level, the switch S6 is turned on, the switch S5 is turned off, and the reference voltage setting circuit 32 outputs the reference voltage $CV_{REF\_MIN}$ corresponding to the preset value (of the voltage signal) as the reference voltage $CV_{REF}$. In addition, in a case that the conduction angle signal Vcd is greater than the angle threshold Vcd_ref, the comparator CMP4 outputs a high level, the switch S6 is turned off, the switch S5 is turned on, and the reference voltage setting circuit 32 outputs the voltage (Vcd-Vcd_ref) $*K+CV_{REF\_MIN}$ as the reference voltage $CV_{REF}$.

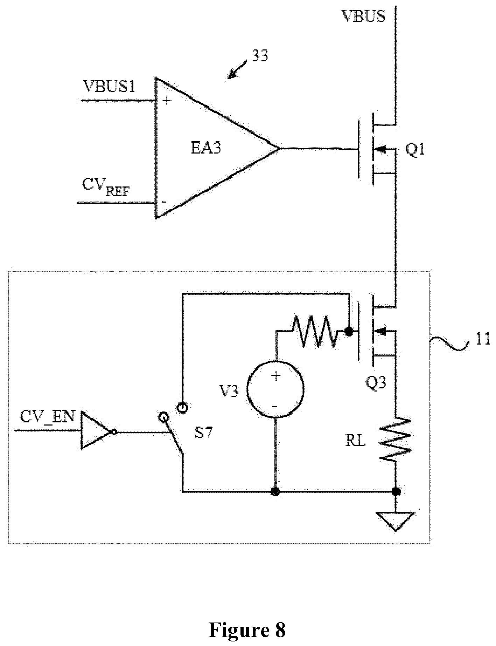

Figure 8 is a circuit diagram showing a bleeder circuit and a bleeding controller according to the embodiment of the present disclosure. As shown in Figure 8, the bleeder circuit 1 includes a transistor Q1, and a maximum current clamp circuit 11. The maximum current clamp circuit 11 and the transistor Q1 are connected in series between the direct current bus and the ground terminal. The maximum current clamp circuit 11 serves as a protection circuit for limiting a maximum value of a current. Since the maximum current clamp circuit 11 is arranged on the bleeding path, it is used to limit a maximum value of the bleeder current. That is, in a case that the bleeder current IQ1 is less than a clamp current IMAX, the maximum current clamp circuit 11 is in a shoot-through state. When the bleeder current IQ1 rises to the clamp current IMAX, the maximum current clamp circuit 11 clamps the bleeder current to maintain the bleeder current IQ1 at the clamp current IMAX.

In addition, the bleeding controller 33 includes an error amplifier EA3. One input terminal of the error amplifier EA3 receives the direct current bus voltage sampling signal VBUS1, the other input terminal of the error amplifier EA3 receives the reference voltage $CV_{REF}$, and an output terminal of the error amplifier EA3 outputs a control signal to control the operation state of the transistor Q1. Thus, a voltage feedback loop is formed, and the direct current bus voltage is maintained to correspond to the reference voltage $CV_{REF}$ by adjusting the bleeder current. In this embodiment, the bleeding controller 33 can regulate the bleeder current in accordance with an error between the reference voltage $CV_{REF}$ and the direct current bus voltage sampling signal VBUS1 to maintain the direct current bus voltage equal to the desired value.

In the case that the conduction angle is large, the reference voltage $CV_{REF}$ increases with the conduction angle signal, so that the bus voltage sampling signal VBUS1 is adjusted to be increased, and then the direct current bus voltage VBUS is increased.

In the present embodiment, the maximum current clamp circuit 11 includes a transistor Q3, a voltage source V3, a resistor RL, and a switch S7. The voltage source V3 is connected between a control terminal of the transistor Q3 and the ground terminal. When a current flowing through the transistor Q3 is equal to

$$IMAX = \frac{(V3 - Q3\_th)}{RL}$$

, the bleeder current IQ1 of the current path is clamped, where Q3_th is a turn-on threshold voltage of the transistor Q3. The switch S7 is connected between a gate of transistor Q3 and the ground terminal. The switch S7 is controlled by an enable signal CV_EN. The enable signal CV_EN is used to indicate the operation state of the control circuit 3, i.e., detecting an operation time period before the silicon-controlled rectifier dimmer TRIAC is turned on, so as to effectively protect the bleeder circuit 1. In a case that the enable signal CV_EN is a low level, it is indicated that the silicon-controlled rectifier dimmer TRIAC is already turned on, the control circuit 3 no longer adjusts the direct current bus voltage VBUS, the switch S7 is turned on, a gate voltage of the transistor Q3 is pulled down to zero, the transistor Q3 is turned off, the maximum current clamp circuit 11 exits the protection state, and the bleeder circuit 1 does not sink the bleeder current any longer. In a case that the enable signal CV_EN is a high level, it is indicated that the control circuit 3 adjusts the direct current bus voltage VBUS, the switch S7 is turned off, and the transistor Q3 enters the protection state under control of the voltage source V3. It should be understood that the maximum current clamp circuit may also be implemented by other structures, and the state of the bleeder circuit may be controlled in other manners. For example, a switch controlled by the enable signal CV_EN is connected to the gate of the transistor Q1 to control the bleeder circuit.

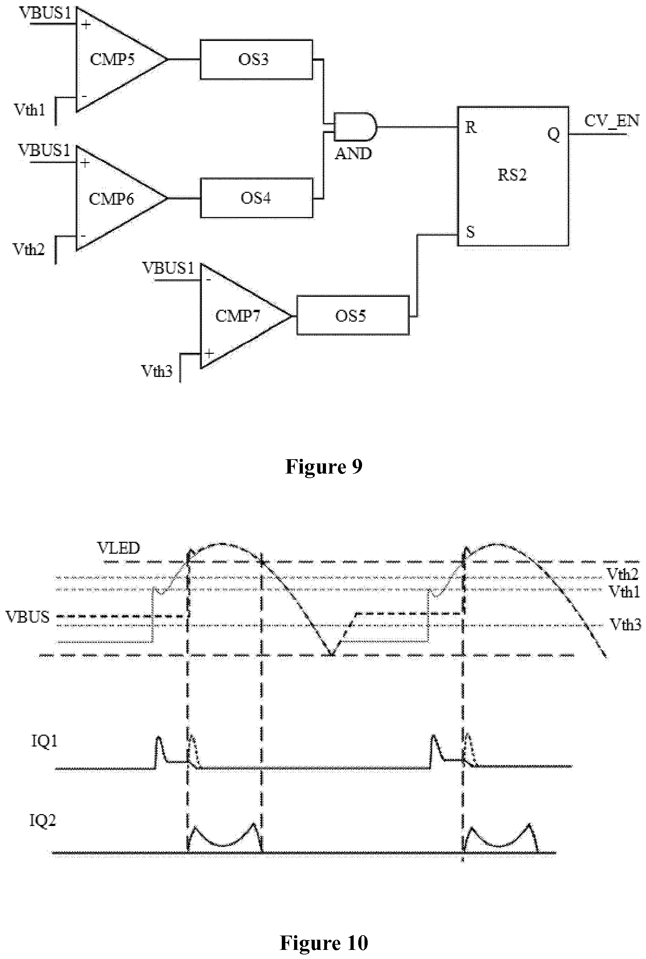

Figure 9 is a circuit diagram showing an enable signal generating circuit for controlling the maximum current clamp circuit according to the embodiment of the present disclosure. An enable signal generating circuit 33a may serves as a part of the bleeding controller 33 or may be a separate circuit module. As shown in Figure 9, the enable signal generating circuit 33a includes comparators CMP5 to COM7, one-shot circuits OS3 to OS5, an AND gate AND, and an RS trigger RS2. The comparator CMP5 is used to compare the direct current bus voltage sampling signal VBUS1 with a threshold Vth1. The one-shot circuit OS3 is used to output a pulse signal having a preset length in response to a rising edge or a falling edge of an output signal of the comparator CMP5. The comparator CMP6 is used to compare the direct current bus voltage sampling signal VBUS1 with a threshold Vth2. The one-shot circuit OS4 is used to output a pulse signal having a preset length in response to a rising edge or a falling edge of an output signal of the comparator CMP6. Two input terminals of the AND gate AND are connected to output terminals of the one-shot circuits OS3 and OS4, respectively, and an output terminal of the AND gate AND is connected to a reset terminal of the RS trigger RS2. The comparator CMP7 is used to compare the direct current bus voltage sampling signal VBUS1 with a threshold Vth3. The one-shot circuit OSS is used to output a pulse signal having a preset length in response to a rising edge or a falling edge of an output signal of the comparator CMP7. An output terminal of the one-shot circuit OSS is connected to a set terminal of the RS trigger RS2.

Figure 10 is an operation waveform diagram of the LED drive circuit according to the embodiment of the present disclosure. The waveforms of the VBUS and IQ1 with solid lines are operation waveforms in a case that the direct current bus voltage VBUS before the silicon-controlled rectifier dimmer TRIAC is turned on is set to a constant voltage, and the waveforms of the VBUS and IQ1 with dotted lines are waveforms obtained by performing controlling according to the embodiment of the present disclosure. As shown in Figure 10, at the beginning of each operation period, the direct current bus voltage sampling signal VBUS 1 is less than the threshold Vth3, and thus a pulse signal is triggered to set the RS trigger RS2. The enable signal CV_EN switches to a high level, which indicates that the silicon-controlled rectifier dimmer TRIAC is turned off. The enable signal CV_EN controls the maximum current clamp circuit to enter the protection state, and the bleeding controller 33 performs constant voltage control based on the conduction angle signal Vcd, so that the direct current bus voltage corresponds to the reference voltage $CV_{REF}$. If the silicon-controlled rectifier dimmer TRIAC is turned on, the direct current bus voltage VBUS rises rapidly. The direct current bus voltage sampling signal VBUS1 successively rises to a value greater than the threshold Vth1 and a value greater than the threshold Vth2 in a short time period, to trigger two pulse signals, respectively. If the direct current bus voltage sampling signal VBUS1 rises too fast, the two pulse signals may overlap. In this case, the AND gate AND may output a pulse signal to reset the RS trigger RS2. The enable signal CV_EN switches to a low level, which indicates that the silicon-controlled rectifier dimmer TRIAC is turned on. The enable signal CV_EN controls the maximum current clamp circuit to exit the protection state, and the direct current bus voltage increases with the input voltage, rather than under the constant voltage control. In this way, the operation state of the silicon-controlled rectifier dimmer TRIAC can be effectively detected. It should be understood that the enable signal generating circuit 33a may also be implemented by other logic circuits.

As shown in Figure 10, before the silicon-controlled rectifier dimmer TRIAC is turned on, the direct current bus voltage VBUS is in a constant voltage state by controlling the bleeder circuit according to the embodiment of the present disclosure. In this embodiment, the desired value of the direct current bus voltage is adjustable. In the case that the conduction angle is large, the desired value is controlled to be increased so as to delay the turn-on time instant. In this way, the direct current bus voltage VBUS when the silicon-controlled rectifier dimmer TRIAC is turned on can be near the lighting voltage VLED by performing controlling, no matter how the conduction angle of the silicon-controlled rectifier dimmer changes, and how properties of the silicon-controlled rectifier dimmer change. Further, as compared with the waveforms of VBUS and IQ1 with solid lines, in this embodiment, the bleeder current of the circuit has a small pulse only in a short time period after the silicon-controlled rectifier dimmer is turned on, and remains low in other time periods than the short time period, which avoids the circuit loss caused by the fact that the bleeder circuit is required to sink the bleeder current before and after the silicon-controlled rectifier dimmer is turned on. Therefore, with the embodiment of the present disclosure, the loss of the bleeder circuit can be reduced, and the system efficiency can be improved.

The bleeder circuit 1 and the control circuit 3 according to the present embodiment may form a circuit module. The circuit module may be used in combination with various silicon-controlled rectifier dimmers, rectification circuits and linear drive circuits to form dimmable LED drive circuits. In a case that the circuit module according to the embodiment of the present disclosure is used in combination with various silicon-controlled rectifier dimmers having different maximum conduction angles, high efficiency and low loss can be achieved.

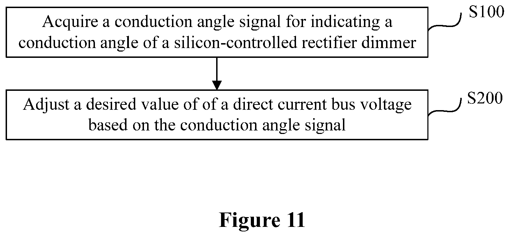

Figure 11 is a flowchart showing a control method for controlling an LED drive circuit according to an embodiment of the present disclosure, which is not covered by the appended claims. According to the control method, in a case that a conduction angle signal is greater than an angle threshold, a direct current bus voltage is adjusted to delay a turn-on time instant of the silicon-controlled rectifier dimmer.

Specifically, in the case that the conduction angle signal is greater than the angle threshold, the direct current bus voltage is increased so that an absolute value of a difference between the direct current bus voltage when the silicon-controlled rectifier dimmer is turned on and a preset lighting voltage of an LED load is in a preset range.

Specifically, in the case that the conduction angle signal is greater than the angle threshold, the direct current bus voltage is controlled to be maintained at a first voltage, where the first voltage is set so that an absolute value of a difference between the direct current bus voltage when the silicon-controlled rectifier dimmer is turned on and a preset lighting voltage of an LED load is in a preset range.

Specifically, in the case that the conduction angle signal is greater than the angle threshold, the direct current bus voltage is increased so that the direct current bus voltage when the silicon-controlled rectifier dimmer is turned on is not less than a preset lighting voltage of an LED load.

As shown in Figure 11, the control method includes the following steps S100 and S200.

In step S100, a conduction angle signal for indicating a conduction angle of the silicon-controlled rectifier dimmer is acquired.

In step S200, a desired value of the direct current bus voltage is adjusted based on the conduction angle signal.

Further, step S200 may be performed by:

adjusting the desired value so that the direct current bus voltage when the silicon-controlled rectifier dimmer is turned on is slightly greater than a preset lighting voltage. Specifically, in the case that the conduction angle signal is greater than the angle threshold, the desired value is controlled to change with the conduction angle signal. In addition, in a case that the conduction angle signal is less than the angle threshold, the desired value is controlled to be a preset value equal to or greater than zero.

A reference voltage $CV_{REF}$ for indicating the desired value is adjusted based on the following formula:

$$CV_{REF} = (Vcd - Vcd\_ref) \times K + CV_{REF\_MIN}$$

where $CV_{REF}$ denotes the reference voltage, Vcd denotes the conduction angle signal, Vcd_ref denotes the angle threshold, $CV_{REF\_MIN}$ denotes a reference voltage corresponding the preset value, the angle threshold is set to correspond to the conduction angle signal when the direct current bus voltage is equal to the preset lighting voltage during the conduction of the silicon-controlled rectifier dimmer, and K denotes a preset adjustment coefficient.

Further, step S100 may be performed by: detecting the direct current bus voltage to acquire the conduction angle signal of the silicon-controlled rectifier dimmer; or detecting a drive current of an LED load to acquire the conduction angle signal.

The detecting the direct current bus voltage to acquire the conduction angle signal of the silicon-controlled rectifier dimmer includes:
acquiring a signal for indicating a time period from a time instant when the direct conduction angle signal.

The detecting a drive current of an LED load to acquire the conduction angle signal includes:
acquiring a signal for indicating a time period during which the drive current is continuously greater than a third threshold to acquire the conduction angle signal.

With the technical solutions according to the embodiments of the present disclosure, the direct current bus voltage during the bleeding is controlled to be constant, and the desired value of the direct current bus voltage is adjustable, so that the turn-on time instant can be delayed in the case that the conduction angle is large, and the direct current bus voltage can rapidly rise to a voltage greater than the lighting voltage when the silicon-controlled rectifier dimmer is turned on. In this way, it is not required to sink the bleeder current for a long time period after the silicon-controlled rectifier dimmer is turned on, effectively reducing the system loss, and improving the system efficiency.

**Claims**

1.  A dimmable light emitting diode, LED, drive circuit, comprising:

    a silicon-controlled rectifier dimmer (TRIAC);
    a direct current bus;
    a rectification circuit (4) coupled to the silicon-controlled rectifier dimmer (TRIAC), an output terminal of the rectification circuit being connected to the direct current bus, wherein the rectification circuit (4) is configured to generate a direct current bus voltage to an LED load through the direct current bus;
    a linear drive circuit (2) configured to control a drive current flowing through the LED load; and

a bus voltage adjustment circuit (X) comprising:

a bleeder circuit (1) connected between the direct current bus and ground; **characterized in that** the bus voltage adjustment circuit (X) further comprises a control circuit (3) configured to acquire a conduction angle signal of the silicon-controlled rectifier dimmer and control the direct current bus voltage to be near a lighting voltage of the LED load by adjusting a bleeder current of the bleeder circuit (1) when the conduction angle signal is greater than an angle threshold, wherein the conduction angle signal indicates a conduction angle of the silicon-controlled rectifier dimmer, the angle threshold is set to correspond to a conduction angle signal when the direct current bus voltage is equal to the lighting voltage of the LED load during the conduction of the silicon-controlled rectifier dimmer.

2. The dimmable LED drive circuit according to claim 1, wherein the bus voltage adjustment circuit (X) is configured to increase the direct current bus voltage in the case that the conduction angle signal is greater than the angle threshold, so that the absolute value of the difference between the direct current bus voltage when the silicon-controlled rectifier dimmer is turned on and the lighting voltage of the LED load is in the preset range.

3. The dimmable LED drive circuit according to claim 1, wherein the bus voltage adjustment circuit (X) is configured to control the direct current bus voltage to be maintained at a first voltage in the case that the conduction angle signal is greater than the angle threshold, wherein the first voltage is set so that the absolute value of the difference between the direct current bus voltage when the silicon-controlled rectifier dimmer is turned on and the lighting voltage of the LED load is in a preset range, and the first voltage is generated based on the conduction angle signal.

4. The dimmable LED drive circuit according to claim 1, wherein the bus voltage adjustment circuit (X) is configured to increase the direct current bus voltage in the case that the conduction angle signal is greater than the angle threshold, so that the direct current bus voltage when the silicon-controlled rectifier dimmer is turned on is not less than the lighting voltage of the LED load.

5. The dimmable LED drive circuit according to claim 1, wherein the bleeder circuit (1) is configured to receive an output signal of the rectification circuit (4).

6. The dimmable LED drive circuit according to claim 5, wherein the control circuit (3) is configured to adjust a reference voltage for indicating a desired value of the direct current bus voltage to adjust the bleeder current so that the direct current bus voltage when the silicon-controlled rectifier dimmer is turned on is not less than the lighting voltage of the LED load.

7. The dimmable LED drive circuit according to claim 5, wherein the control circuit (3) is configured to control the reference voltage for indicating the desired value of the direct current bus voltage in accordance with the conduction angle signal in the case that the conduction angle signal is greater than the angle threshold, and control the reference voltage for indicating the desired value of the direct current bus voltage to be a preset value in a case that the conduction angle signal is less than the angle threshold.

8. The dimmable LED drive circuit according to claim 7, wherein the control circuit (3) is configured to control, in the case that the conduction angle signal is greater than the angle threshold, the reference voltage for indicating the desired value to meet the following formula:

$$CV_{REF} = (Vcd - Vcd\_ref) \times K + CV_{REF\_MIN}$$

wherein $CV_{REF}$ denotes the reference voltage, Vcd denotes the conduction angle signal, Vcd_ref denotes the angle threshold, $CV_{REF\_MIN}$ denotes a reference voltage corresponding the preset value, and K denotes a preset adjustment coefficient.

9. The dimmable LED drive circuit according to claim 5, wherein the control circuit (3) is configured to detect the direct current bus voltage or the drive current of the LED load to acquire the conduction angle signal.

10. The dimmable LED drive circuit according to claim 9, wherein the control circuit (3) comprises:
a detection circuit configured to:

in a case that the control circuit (3) detects the direct current bus voltage, acquire a signal for indicating a time period from a time instant when the direct current bus voltage rises to a voltage greater than a first threshold to a time instant when the direct current bus voltage decreases to a voltage less than a second threshold to acquire the conduction angle signal; or
in a case that the control circuit (3) detects drive current of the LED load, acquire a signal for indicating a time period during which the drive current is continuously greater than a third threshold to acquire the conduction angle signal.

11. The dimmable LED drive circuit according to claim 5, wherein the bleeder circuit (1) further comprises a maximum current clamp circuit (11) to clamp a maximum value of the bleeder current.

**Patentansprüche**

1. Dimmbare Leuchtdioden-, LED-, Treiberschaltung, umfassend:

   einen siliziumgesteuerten Gleichrichterdimmer (TRIAC);
   einen Gleichstrombus;
   eine Gleichrichterschaltung (4), die mit dem siliziumgesteuerten Gleichrichterdimmer (TRIAC) gekoppelt ist, wobei ein Ausgangsanschluss der Gleichrichterschaltung mit dem Gleichstrombus verbunden ist, wobei die Gleichrichterschaltung (4) ausgebildet ist, eine Gleichstrombusspannung an einer LED-Last durch den Gleichstrombus zu erzeugen;
   eine Lineartreiberschaltung (2), die ausgebildet ist, einen durch die LED-Last fließenden Treiberstrom zu steuern; und
   eine Busspannungseinstellschaltung (X), umfassend:

      eine zwischen dem Gleichstrombus und Masse angeschlossene Ableitschaltung (1);
      **dadurch gekennzeichnet, dass** die Busspannungseinstellschaltung (X) ferner eine Steuerschaltung (3) umfasst, die ausgebildet ist, ein Leitungswinkelsignal des siliziumgesteuerten Gleichrichterdimmers zu erhalten und die Gleichstrombusspannung durch Einstellen eines Ableitstroms der Ableitschaltung (1) anzusteuern, in der Nähe einer Beleuchtungsspannung der LED-Last zu liegen, wenn das Leitungswinkelsignal größer als ein Winkelschwellenwert ist, wobei das Leitungswinkelsignal einen Leitungswinkel des siliziumgesteuerten Gleichrichterdimmers anzeigt, wobei der Winkelschwellenwert eingestellt ist, einem Leitungswinkelsignal zu entsprechen, wenn die Gleichstrombusspannung während der Leitung des siliziumgesteuerten Gleichrichterdimmers gleich der Beleuchtungsspannung der LED-Last ist.

2. Dimmbare LED-Treiberschaltung nach Anspruch 1, wobei die Busspannungseinstellschaltung (X) ausgebildet ist, die Gleichstrombusspannung zu erhöhen, falls das Leitungswinkelsignal größer als der Winkelschwellenwert ist, so dass der Absolutwert der Differenz zwischen der Gleichstrombusspannung beim Einschalten des siliziumgesteuerten Gleichrichterdimmers und der Beleuchtungsspannung der LED-Last in dem voreingestellten Bereich liegt.

3. Dimmbare LED-Treiberschaltung nach Anspruch 1, wobei die Busspannungseinstellschaltung (X) ausgebildet ist, die Gleichstrombusspannung anzusteuern, auf einer ersten Spannung gehalten zu werden, falls das Leitungswinkelsignal größer als der Winkelschwellenwert ist, wobei die erste Spannung so eingestellt ist, dass der Absolutwert der Differenz zwischen der Gleichstrombusspannung beim Einschalten des siliziumgesteuerten Gleichrichterdimmers und der Beleuchtungsspannung der LED-Last in einem voreingestellten Bereich liegt, und wobei die erste Spannung auf der Basis des Leitungswinkelsignals erzeugt ist.

4. Dimmbare LED-Treiberschaltung nach Anspruch 1, wobei die Busspannungseinstellschaltung (X) ausgebildet ist, die Gleichstrombusspannung zu erhöhen, falls das Leitungswinkelsignal größer als der Winkelschwellenwert ist, so dass die Gleichstrombusspannung beim Einschalten des siliziumgesteuerten Gleichrichterdimmers nicht kleiner als die Beleuchtungsspannung der LED-Last ist.

5. Dimmbare LED-Treiberschaltung nach Anspruch 1, wobei
   die Ableitschaltung (1) ausgebildet ist, ein Ausgangssignal der Gleichrichterschaltung (4) zu empfangen.

6. Dimmbare LED-Treiberschaltung nach Anspruch 5, wobei die Steuerschaltung (3) ausgebildet ist, eine Referenzspannung zum Anzeigen eines gewünschten Werts der Gleichstrombusspannung einzustellen, um den Ableitstrom so einzustellen, dass die Gleichstrombusspannung beim Einschalten des siliziumgesteuerten Gleichrichterdimmers nicht kleiner als die Beleuchtungsspannung der LED-Last ist.

7. Dimmbare LED-Treiberschaltung nach Anspruch 5, wobei die Steuerschaltung (3) ausgebildet ist, die Referenzspannung zum Anzeigen des gewünschten Werts der Gleichstrombusspannung in Übereinstimmung mit dem Leitungswinkelsignal anzusteuern, falls das Leitungswinkelsignal größer als der Winkelschwellenwert ist, und die Referenzspannung zum Anzeigen des gewünschten Werts der Gleichstrombusspannung anzusteuern, einen voreingestellten Wert anzunehmen, falls das Leitungswinkelsignal kleiner als der Winkelschwellenwert ist.

**8.** Dimmbare LED-Treiberschaltung nach Anspruch 7, wobei die Steuerschaltung (3) ausgebildet ist, falls das Leitungswinkelsignal größer als der Winkelschwellenwert ist, die Referenzspannung zum Anzeigen des gewünschten Werts anzusteuern, die folgende Formel einzuhalten:

$$CV_{REF} = (Vcd\text{-}Vcd\_ref) \times K + CV_{REF\_MIN}$$

wobei $CV_{REF}$ die Referenzspannung bezeichnet, Vcd das Leitungswinkelsignal bezeichnet, Vcd_ref den Winkelschwellenwert bezeichnet, $CV_{REF\_MIN}$ eine Referenzspannung bezeichnet, die dem voreingestellten Wert entspricht, und K einen voreingestellten Anpassungskoeffizienten bezeichnet.

**9.** Dimmbare LED-Treiberschaltung nach Anspruch 5, wobei die Steuerschaltung (3) ausgebildet ist, die Gleichstrombusspannung oder den Treiberstrom der LED-Last zu detektieren, um das Leitungswinkelsignal zu erhalten.

**10.** Dimmbare LED-Treiberschaltung nach Anspruch 9, wobei die Steuerschaltung (3) umfasst: eine Detektionsschaltung, die ausgebildet ist:

falls die Steuerschaltung (3) die Gleichstrombusspannung detektiert, ein Signal zum Anzeigen einer Zeitspanne von einem Zeitpunkt, an dem die Gleichstrombusspannung auf eine Spannung über einen ersten Schwellenwert ansteigt, bis zu einem Zeitpunkt zu erhalten, an dem die Gleichstrombusspannung auf eine Spannung unter einen zweiten Schwellenwert abfällt, um das Leitungswinkelsignal zu erhalten, oder

falls die Steuerschaltung (3) den Treiberstrom der LED-Last detektiert, ein Signal zum Anzeigen einer Zeitperiode zu erhalten, während der der Treiberstrom kontinuierlich größer als ein dritter Schwellenwert ist, um das Leitungswinkelsignal zu erhalten.

**11.** Dimmbare LED-Treiberschaltung nach Anspruch 5, wobei die Ableitschaltung (1) ferner eine Maximalstrombegrenzungsschaltung (11) zum Begrenzen eines Maximalwerts des Ableitstroms umfasst.

**Revendications**

**1.** Circuit d'attaque de diode électroluminescente, DEL, modulable, comprenant :

un gradateur redresseur commandé au silicium (TRIAC) ;
un bus de courant continu ;

un circuit de redressement (4) couplé au gradateur redresseur commandé au silicium (TRIAC), une borne de sortie du circuit de redressement étant connectée au bus de courant continu, dans lequel le circuit de redressement (4) est configuré pour générer une tension de bus de courant continu au niveau d'une charge de DEL à travers le bus de courant continu ;
un circuit d'attaque linéaire (2) configuré pour commander un courant d'attaque circulant à travers la charge de DEL ; et
un circuit d'ajustement de tension de bus (X) comprenant :

un circuit de fuite (1) relié entre le bus de courant continu et la masse : **caractérisé en ce que** le circuit d'ajustement de tension de bus (X) comprend en outre
un circuit de commande (3) configuré pour acquérir un signal d'angle de conduction du gradateur redresseur commandé au silicium et commander la tension de bus de courant continu pour qu'elle soit proche d'une tension d'éclairage de la charge de DEL en ajustant un courant de fuite du circuit de fuite (1) lorsque le signal d'angle de conduction
est supérieur à un seuil d'angle, dans lequel le signal
d'angle de conduction indique un angle de conduction du gradateur redresseur commandé au silicium, le seuil d'angle est défini de façon à correspondre à un signal d'angle de conduction lorsque la tension de bus de courant continu est égale à la tension d'éclairage de la charge de DEL pendant la conduction du gradateur redresseur commandé au silicium.

**2.** Circuit d'attaque de DEL modulable selon la revendication 1, dans lequel le circuit d'ajustement de tension de bus (X) est configuré pour augmenter la tension de bus de courant continu dans le cas où le signal d'angle de conduction est supérieur au seuil d'angle, de sorte que la valeur absolue de la différence entre la tension de bus de courant continu lorsque le gradateur redresseur commandé au silicium est activé et la tension d'éclairage de la charge de DEL se trouve dans la plage prédéfinie.

**3.** Circuit d'attaque de DEL modulable selon la revendication 1, dans lequel le circuit d'ajustement de tension de bus (X) est configuré pour commander la tension de bus de courant continu afin que celle-ci soit maintenue à une première tension dans le cas où le signal d'angle de conduction est supérieur au seuil d'angle, dans lequel la première tension est définie de sorte que la valeur absolue de la différence entre la tension de bus de courant continu lorsque le gradateur redresseur commandé au silicium est activé et la tension d'éclairage de la charge de DEL se trouve dans une plage prédéfinie, et la première tension est générée sur la base du signal d'angle de conduction.

4. Circuit d'attaque de DEL modulable selon la revendication 1, dans lequel le circuit d'ajustement de tension de bus (X) est configuré pour augmenter la tension de bus de courant continu dans le cas où le signal d'angle de conduction est supérieur au seuil d'angle, de sorte que la tension de bus de courant continu lorsque le gradateur redresseur commandé au silicium est activé ne soit pas inférieure à la tension d'éclairage de la charge de DEL.

5. Circuit d'attaque de DEL modulable selon la revendication 1, dans lequel le circuit de fuite (1) est configuré pour recevoir un signal de sortie du circuit de redressement (4).

6. Circuit d'attaque de DEL modulable selon la revendication 5, dans lequel le circuit de commande (3) est configuré pour ajuster une tension de référence afin d'indiquer une valeur souhaitée de la tension de bus de courant continu pour ajuster le courant de fuite de sorte que la tension de bus de courant continu lorsque le gradateur redresseur commandé au silicium est activé ne soit pas inférieure à la tension d'éclairage de la charge de DEL.

7. Circuit d'attaque de DEL modulable selon la revendication 5, dans lequel le circuit de commande (3) est configuré pour commander la tension de référence afin d'indiquer la valeur souhaitée de la tension de bus de courant continu conformément au signal d'angle de conduction dans le cas où le signal d'angle de conduction est supérieur au seuil d'angle, et commander la tension de référence afin d'indiquer que la valeur souhaitée de la tension de bus de courant continu doit être une valeur prédéfinie dans un cas où le signal d'angle de conduction est inférieur au seuil d'angle.

8. Circuit d'attaque de DEL modulable selon la revendication 7, dans lequel le circuit de commande (3) est configuré pour commander, dans le cas où le signal d'angle de conduction est supérieur au seuil d'angle, la tension de référence afin d'indiquer que la valeur souhaitée doit répondre à la formule suivante :

$$CV_{REF} = (Vcd\text{-}Vcd\_ref) \times K + CV_{REF\_MIN}$$

dans laquelle $CV_{REF}$ désigne la tension de référence, Vcd désigne le signal d'angle de conduction, Vcd_ref désigne le seuil d'angle, $CV_{REF\_MIN}$ désigne une tension de référence correspondant à la valeur prédéfinie, et K désigne un coefficient d'ajustement prédéfini.

9. Circuit d'attaque de DEL modulable selon la revendication 5, dans lequel le circuit de commande (3) est configuré pour détecter la tension de bus de courant continu ou le courant d'attaque de la charge de DEL afin d'acquérir le signal d'angle de conduction.

10. Circuit d'attaque de DEL modulable selon la revendication 9, dans lequel le circuit de commande (3) comprend :
un circuit de détection configuré pour :

dans un cas où le circuit de commande (3) détecte la tension de bus de courant continu, acquérir un signal afin d'indiquer une période de temps allant d'un instant où la tension de bus de courant continu augmente à une tension supérieure à un premier seuil à un instant où la tension de bus de courant continu diminue à une tension inférieure à un deuxième seuil pour acquérir le signal d'angle de conduction ; ou
dans un cas où le circuit de commande (3) détecte le courant d'attaque de la charge de DEL, acquérir un signal afin d'indiquer une période de temps pendant laquelle le courant d'attaque est continuellement supérieur à un troisième seuil pour acquérir le signal d'angle de conduction.

11. Circuit d'attaque de DEL modulable selon la revendication 5, dans lequel le circuit de fuite (1) comprend en outre un circuit limiteur de courant maximal (11) pour limiter une valeur maximale du courant de fuite.

**Figure 1**

**Figure 2**

**Figure 3**

**Figure 4**

**Figure 5**

**Figure 6**

**Figure 7**

**Figure 8**

**Figure 9**

**Figure 10**

Acquire a conduction angle signal for indicating a conduction angle of a silicon-controlled rectifier dimmer ⟩ S100

Adjust a desired value of of a direct current bus voltage based on the conduction angle signal ⟩ S200

**Figure 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106888524 A
- US 2013343090 A1